# EUROPEAN PATENT APPLICATION

(11) **EP 0 872 653 A1**
(43) Date of publication of application: **21.10.1998**
(21) Application number: 98105732.6
(22) Date of filing: 30.03.1998
(51) Int. Cl.: F16C 29/06

(54) **Sliding block with ball-bearing system**

(30) Priority: 17.04.1997 IT BO970230
(71) Applicant: Lazzari S.r.l., 47900 Rimini (IT)
(72) Inventor: Lazzari, Marco, 47900 Rimini (IT)
(74) Representative: Modiano, Guido, Dr.-Ing.

(57) **Abstract**

A sliding block with ball-bearing system, comprising: a plate (2), wherein there is provided a seat (3) formed by two parallel straight walls (4, 5) joined by semicircular walls (6, 7); a plate-like body (16), which is arranged in the seat (3) and has an edge comprising two portions (20, 21) which are parallel to the straight walls (4, 5) and two portions which are semicircular and concentric to the semicircular walls (6, 7), and a groove, closed in a loop, is formed along the edge and is open outward; respective wheels (29, 30) are rotatably supported on either side of the groove and have a diameter which is larger than the diameter of the semicircular portions; a plurality of balls (31) are arranged in the groove in tangential contact with the walls (4, 5, 6, 7) and are accommodated in recesses of a flexible element which is closed in a loop around the wheels (29, 30).

## Description

The present invention relates to a sliding block with ball-bearing system.

The invention is meant in particular to provide sliding guides for carriages and sliders in machine tools.

Sliding blocks for the sliding of carriages and sliders in machine tools are already known using a ball-bearing system. In particular, said sliding blocks are provided, along their longitudinal edges, with V-shaped grooves which open outward and are arranged opposite respective V-shaped grooves formed in the carriage or slider so as to form parallel channels, whose opposite ends are connected to each other by arc-like slots which close a loop-shaped path wherein balls roll.

Conventional sliding blocks, however, entail the severe drawback that they are excessively noisy, especially if the carriages and the sliders must move at high speed.

The aim of the present invention is to improve the sliding blocks currently used to guide carriages and sliders so as to essentially reduce noise.

Within the scope of this aim, an object of the present invention is to provide a sliding block which is structurally simple and easy to install.

This aim and this object are achieved by a sliding block with ball-bearing system, characterized in that it comprises: a plate, wherein a seat formed by two parallel straight walls joined by semicircular walls is provided; a plate-like body, arranged in said seat and having an edge comprising two portions which are parallel to said straight walls and two portions which are semicircular and concentric to said semicircular walls, and a groove, closed in a loop, is formed along said edge and is open outward; respective wheels being rotatably supported on said body concentrically to said semicircular portions and on either side of said groove, said wheels having a diameter larger than the diameter of said semicircular portions, a plurality of balls being arranged in said groove in tangential contact with said walls, said balls being accommodated in recesses of a flexible element which is closed in a loop around said wheels.

Further characteristics and advantages of the sliding block with ball-bearing system according to the present invention will become apparent from the following detailed description of a preferred embodiment, illustrated only by way of non-limitative example in the accompanying drawings, wherein:
figure 1 is a plan view of the sliding block according to the present invention;
figure 2 is a sectional view, taken along the plane II-II of figure 1;
figure 3 is a side view of the sliding block according to the present invention;
figure 4 is a sectional view, taken along the plane IV-IV of figure 1;
figure 5 is a sectional view, taken along the plane V-V of figure 1; and finally
figure 6 is a view of a manner of application of the invention.

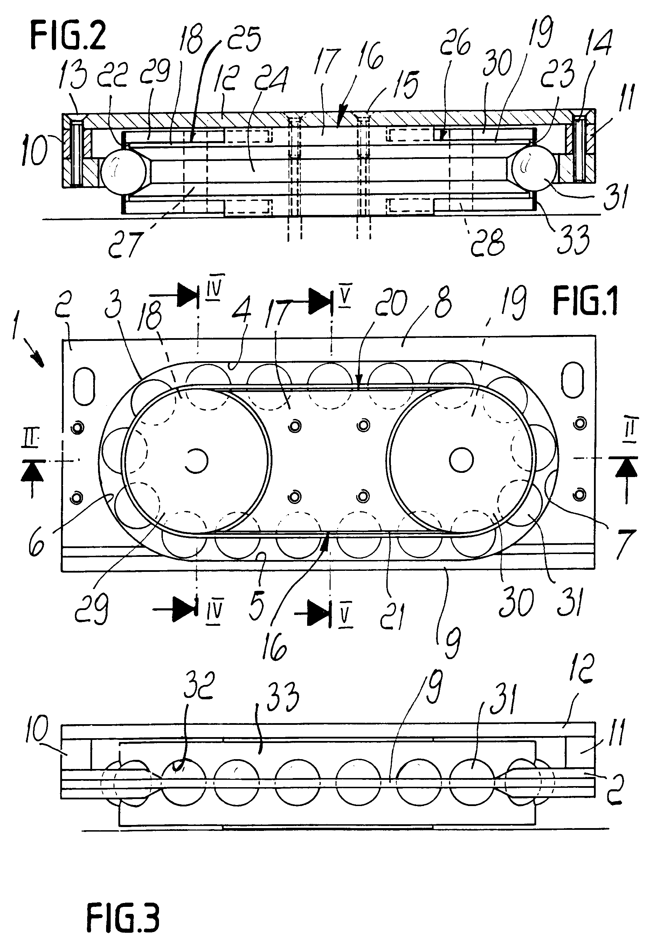

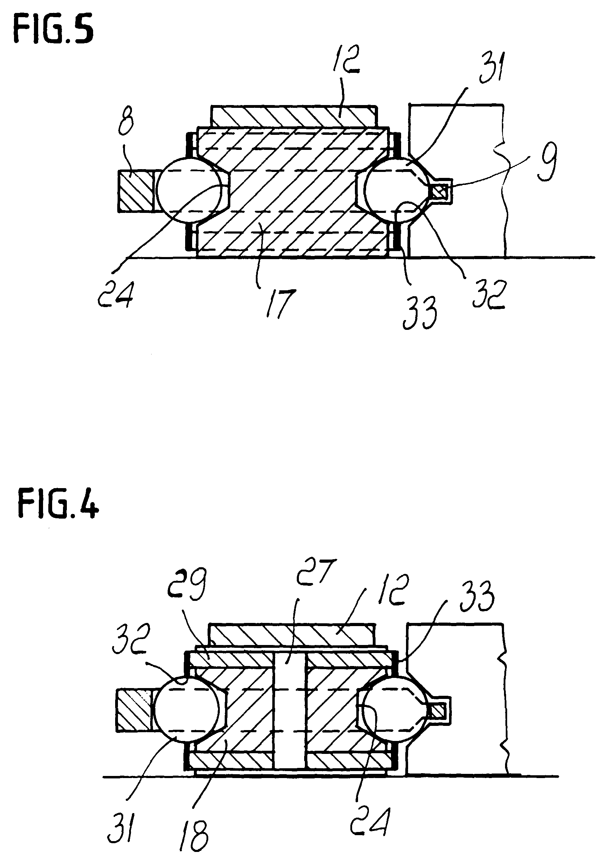

With reference to figures 1 to 5, the sliding block is generally designated by the reference numeral 1 and comprises a rectangular plate wherein an opening forming a seat 3 is provided.

The seat 3 is formed by two straight walls 4 and 5 which are connected to each other by two semicircular walls 6 and 7.

The walls 4 and 5 are parallel to each other, and at said walls the edges of the plate 2 form two strips 8 and 9. The strip 8 is as thick as the plate 2, while the strip 9 is thinner by the same extent above and below.

Two blocks 10 and 11 are located at the opposite ends of the plate 2 and at the centerline; a flat bar 12 is arranged on the blocks 10 and 11 and lies over the seat 3 in a bridge-like fashion. The bar 12 is fixed to the plate 2 by means of screws 13 and 14 passing through the blocks 10 and 11.

A plate-like body 16 is fixed below the bar 12 by means of screws 15. The body 16 is arranged in the seat 3 and comprises a central portion 17, from which two semicircular expansions 18 and 19 protrude. The central portion has two mutually opposite edges 20 and 21 which are straight and parallel to the straight walls 4 and 5 of the seat 3 and the two semicircular expansions 18 and 19 have edges 22 and 23 which are semicircular and concentric to the semicircular walls 6 and 7 of the seat 3. Along the straight edges 20 and 21 and the semicircular edges 22 and 23 of the body 16 there is provided a groove 24 which is closed in a loop and has a trapezoidal cross-section which is open outward, i.e., towards the walls 4-7 of the plate 2.

Respective circular hollows 25 and 26 are formed on the upper and lower faces of the body 16 and at the opposite expansions 18 and 19 thereof and are concentric to the semicircular walls 6 and 7. Two respective pairs of wheels 29 and 30 are rotatably supported in the hollows 25 and 26 by means of pivots 27 and 28 passing through the expansions 18 and 19 of the body 16; said wheels are not as high as the hollows 25 and 26. The diameter of the wheels 29 and 30 is slightly greater than the diameter of the expansions 18 and 19.

A plurality of balls 31 are arranged in the groove 24 and are externally in tangential contact with the walls 6-9 of the seat 3 and internally in tangential contact with the oblique walls of the groove 24.

The balls 31 are accommodated in holes or recesses 32 of a flexible element 33 closed in a loop around the wheels 29 and 30.

The flexible element 33 is advantageously constituted by a band of steel, nylon or the like, and the dimensions of the wheels 29 and 30, of the balls 31 and of the groove 24 are such that the band is at the vertical centerline plane of the balls 31.

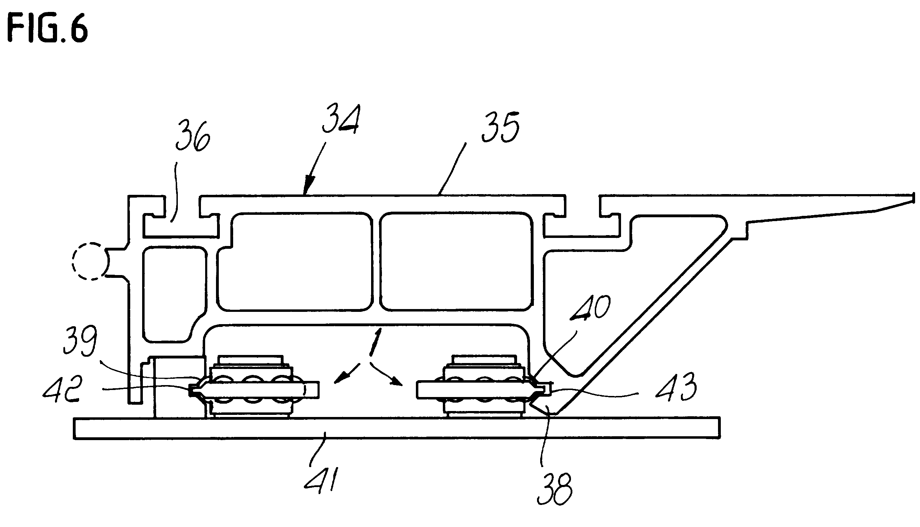

Use of the described sliding block 1 is explained hereinafter with reference to its use as a means for guiding the sliding of a slider in a machine tool, shown in figure 6.

The reference numeral 34 generally designates the worktable of a machine tool, on the machining surface 35 whereof there are provided grooves 36 along which it is possible to position clamps or locators for placing the part to be machined.

The worktable is provided by means of a profiled element having a box-like structure with internal ribs. In the lower part of the profiled element there are provided two parallel guides 37 and 38 having respective grooves 39 and 40 which have mutually opposite V-shaped cross-sections.

The guide 38 is obtained directly from a longitudinal rib of the profiled element, while the guide 37 is formed by a strip which is fixed to an additional longitudinal rib of the profiled element and is provided with means which allow its adjustment with respect to the guide 38.

The slider 41 can slide in the guides 37 and 38, and a machining assembly, for example an electric motor for the actuation of a cutting tool, is mounted on said slider. The slider is, in practice, a bracket which is guided in the guides 37 and 38 by means of two or more sliding blocks 1.

The sliding blocks 1 are arranged on the slider 41 so that the thinner strips 9 engage the bottom of the grooves 39 and 40. Conveniently, in the bottom of the grooves 39 and 40 there are provided additional longitudinal slots 42 and 43 meant to receive the strips 9 so that said strips do slide against the walls of the grooves 39 and 40.

As described above, the sliding block perfectly achieves the intended aim and object. The main feature is the provision of a flexible element which facilitates the circulation of the balls along the guiding grooves while it keeps them positively equidistant. In this manner, the balls are prevented from rolling loosely and thus cannot collide to each other during the accelerations that they undergo during direction changes or due to friction, producing a high level of noise.

There is also the advantageous fact that the described sliding block has also a considerably low cost, since the parts to be hardened in order to form the rolling tracks of the balls are particularly limited.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A sliding block with ball-bearing system, characterized in that it comprises: a plate (2), wherein there is provided a seat (3) formed by two parallel straight walls (4, 5) joined by semicircular walls (6, 7); a plate-like body (16), arranged in said seat (3) and having an edge comprising two portions (20, 21) which are parallel to said straight walls (4, 5) and two portions (22, 23) which are semicircular and concentric to said semicircular walls (6, 7), and a groove (24), closed in a loop, is formed along said edge and is open outward; respective wheels (29, 30) being rotatably supported on said body (16) concentrically to said semicircular portions (22, 23) and on either side of said groove (24), said wheels having a diameter larger than the diameter of said semicircular portions (22, 23), a plurality of balls (31) being arranged in said groove (24) in tangential contact with said walls (4, 5, 6, 7), said balls being accommodated in recesses (32) of a flexible element (33) which is closed in a loop around said wheels (29, 30).

2. A sliding block according to claim 1, characterized in that the edges of the plate (2) form, at the parallel walls (4, 5), two strips (8, 9) wherein the strip (9) meant to engage the groove (39, 40) of a guide (37, 38) for the sliding of the sliding block (1) is thinner so as to engage in a slot (42, 43) formed in the bottom of said groove (39, 40).

3. A sliding block according to claim 2, characterized in that said plate-like body (16) arranged in said seat (3) comprises a central portion (17) from which two semicircular expansions (29, 30) protrude, said central portion (17) having two opposite edges (20, 21) which are straight and parallel to the straight walls (4, 5) of said seat (3), said two semicircular expansions (29, 30) having edges which are semicircular and concentric to the semicircular walls (6, 7) of said seat (3), said groove (24) closed in a loop being formed along said straight edges (20, 21) and said semicircular edges (22, 23) and having a trapezoidal cross-section which is open towards the outside, respective circular hollows (25, 26) being formed on the upper and lower faces of said plate-like body (16) and at said opposite expansions (29, 30), said hollows being concentric to the semicircular walls (6, 7) of said seat (3), two respective pairs of wheels (29, 30) being rotatably supported in said hollows (25, 26) by means of pivots (27, 28) passing through said expansions (29, 30), said wheels having a diameter slightly larger than the diameter of said expansions (29, 30).

4. A sliding block according to claim 3, characterized in that in said groove (24) formed in the peripheral region of said plate-like body (16) there are provided a plurality of balls (31) in tangential contact with the walls (4, 5, 6, 7) of said seat (3) and with the oblique walls of said groove (24), said balls (31) being accommodated in holes (32) of said flexible element (33) which is closed in a loop around said wheels (29, 30).

5. A sliding block according to claim 4, characterized in that said flexible element (33) is constituted by a band made of steel or nylon and in that the dimensions of said wheels (29, 30), said balls (31) and said groove (24) are such that the belt (33) lies at the vertical centerline plane of the balls (31).
